(19) **Europäisches Patentamt / European Patent Office / Office européen des brevets**

(11) **EP 2 236 820 B1**

(12) **EUROPEAN PATENT SPECIFICATION**

(45) Date of publication and mention
of the grant of the patent:
**19.04.2017 Bulletin 2017/16**

(51) Int Cl.:
*G05F 1/70* <sup>(2006.01)</sup>    *F03D 7/02* <sup>(2006.01)</sup>
*F03D 9/00* <sup>(2016.01)</sup>    *H02J 3/18* <sup>(2006.01)</sup>
*H02J 3/38* <sup>(2006.01)</sup>

(21) Application number: **10156701.4**

(22) Date of filing: **17.03.2010**

(54) **Voltage control method and system for a power generation plant and wind farm**

Procédé de contrôle de la tension et système pour centrale électrique et parc éolien

Spannungssteuerverfahren und System für ein Stromkraftwerk und einen Windpark

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.03.2009 ES 200900729**

(43) Date of publication of application:
**06.10.2010 Bulletin 2010/40**

(73) Proprietor: **Acciona Windpower S.A.
31621 Sarriguren, Navarra (ES)**

(72) Inventors:
• **Alonso Sadaba, Oscar**
**31621, Sarriguren (Navarra) (ES)**
• **Arlaban Gabeiras, Teresa**
**31621, Sarriguren (Navarra) (ES)**
• **Egana Santamarina, Igor**
**31621, Sarriguren (Navarra) (ES)**
• **Royo Garcia, Ricardo**
**31621, Sarriguren (Navarra) (ES)**
• **Garcia Sayes, Jose Miguel**
**31621, Sarriguren (Navarra) (ES)**
• **Nunez Polo, Miguel**
**31621, Sarriguren (Navarra) (ES)**

(74) Representative: **Pons
Glorieta Ruben Dario 4
28010 Madrid (ES)**

(56) References cited:
**EP-A1- 1 508 951     EP-A2- 1 841 036
EP-A2- 2 175 540     US-A1- 2008 143 304**

**Description**

## OBJECT OF THE INVENTION

The following invention, as stated in the heading of this descriptive report, relates to a voltage control method for a power generation plant, and its essential object is the generation of reactive power according to voltage evolution, in such a way that it contributes to stabilising the voltage of the grid.

A second object of the invention relates to a voltage control system for a power generation plant comprising the abovementioned voltage control method.

A third object of the invention relates to a wind farm comprising said control system.

## FIELD OF APPLICATION

The present specification describes a voltage control method and system for a power generation plant, especially applicable to a wind power generation plant.

## BACKGROUND OF THE INVENTION

With the rising level of penetration of renewable energy plants in the power grid, these types of generators are being required to offer various auxiliary services, such as voltage and frequency control, in order to ensure their correct integration in the grid.

In this way, active and reactive power controls have been developed in order to contribute to frequency and voltage stabilisation, respectively.

This type of generation plant tends to consist of low power generation units (solar panels, wind turbines, etc., in the region of kW up to 10 MW) in comparison with conventional power plants (thermal, nuclear, etc., which can reach up to GW). The coordination and control of all the generation units comprising the renewable generation plant, makes it essential to have communication systems to send the necessary information to each unit.

Wind power generation in particular, is one of the renewable generation sources that has most increased and at the fastest rate. This type of generator unit has traditionally used two different strategies to control voltage during normal functioning.

The first strategy has been to incorporate wind generator voltage controllers in the terminal blocks of the wind turbine. One example of this type of control can be found in patent document US 6965174 B2.

This type of control has a rapid response and does not require any additional control equipment in the substation, since the wind turbines always incorporate voltage controllers and measurements on terminals.

However, it has the disadvantage of only controlling local voltage, which is not a relevant value for the power grid provided that it remains within the specified operating ranges. At the same time, voltage at the connection point of the wind farm is not controlled and therefore may be subject to variations.

The second strategy has been to incorporate controllers for the wind farm, which based on the voltage measured at the connection point of the wind farm, send commands to the wind turbines related to reactive power or the power factor. Examples of this type of control are patent application EP1433238 and part of what is described in patent document US7166928B2.

The disadvantage of this solution is that in order to obtain a rapid response, a sophisticated computer grid is required connecting the wind farm controller to the wind turbines.

At the same time, in relation to delays that exist from the moment the measurements are taken and the commands for the generator units are calculated at the substation until the generator units receive them and generate in consequence (digital delays, and delays in communications and systems' response), there can be fluctuations in the voltage and in the generated reactive power.

Some grid codes specify the level of reactive power that must be generated according to the deviation in voltage, in many cases imposing as a requirement a proportional voltage controller. They also specify the response time required from this controller.

This type of control can entail the appearance of additional voltage fluctuations depending on the type of grid to which the wind farm is connected (generally with low short-circuit power), the proportionality constant (or droop) required in the control, etc.

Document EP1508951A1 discloses a voltage control method according to the preamble of claim 1 and a voltage control system according to the preamble of claim 9.

In this invention a voltage control method is proposed for a power generation plant which resolves the inconveniences mentioned above.

## DESCRIPTION OF THE INVENTION

The present specification describes a voltage control method for a power generation plant, characterised in that it comprises the following steps:

estimating the equivalent grid voltage ($V_{Grid}$) based on the electric magnitudes measured at the connection point of the power generation plant ($V_{Sub}$, $P_{global}$, $Q_{global}$, $I_{global}$, cos fi), and an equivalent model of the power grid to which the power generation plant is connected;

- generation based on said calculated equivalent voltage ($V_{Grid}$) of a command ($Q_{ref}$) indicative of the reactive power to be produced by the power generation plant.

By generating the command for reactive power based on the grid voltage ($V_{Grid}$), which is much more stable than the connection point voltage ($V_{Sub}$), especially in the case of weak grids, the control will be more stable than those in the state of the art, as they are not subject to the fluctuations observed in said connection point voltage, which in consequence generate fluctuations in the reactive power commands. In this way, the voltage at the connection point of the power plant obtained by applying the method of the invention is more stable than those in the state of the art.

In another aspect of the invention, the reactive power command ($Q_{ref}$) is calculated on the basis of the equivalent grid voltage ($V_{Grid}$) and has a value that corresponds to the reactive power that the power generation plant must generate in a stationary manner in order to fulfil a preset law of control.

The fact that the reactive power command corresponds to that which the power generation plant must generate in the stationary state, prevents the delays that exist from the time of taking the measurements and calculating the commands for the generator units in the substation until the generator units receive them and generate in consequence (digital delays and delays in communication and systems' response), from affecting the system's controllability.

In a first alternative of the invention, the law of control defines the reactive power to be generated ($Q_{ref}$) according to the voltage at the connection point of the power generation plant ($V_{Sub}$) and a reference voltage ($V_{ref}$).

According to the first alternative of the invention, it is moreover calculated the voltage at the connection point ($V_{Sub\_Est}$) that will be reached in a stationary manner, on the basis of the equivalent grid voltage ($V_{Grid}$) and assuming a generated reactive power equal to the command ($Q_{ref}$).

Said voltage control law, according to the first alternative of the invention, may be imposed by the grid operator responsible for safeguarding the stability of the power system and usually corresponds to a proportional control. In this case, the law of control that defines the required response for the power generation plant includes, in addition to the reference voltage for the voltage at the connection point ($V_{ref}$), a constant (K) that relates the voltage at the connection point ($V_{Sub}$) and the reactive power ($Q_{ref}$) to be generated by the power generation plant.

In a second alternative of the invention, the law of control defines the voltage that must be reached in a stationary manner at the point of connection of the wind farm ($V_{ref}$). In this way, the command ($Q_{ref}$) corresponds to the reactive power that must be generated by the power generation plant in a stationary manner in order to eliminate the error in the stationary state between the command voltage ($V_{ref}$) and the measured voltage. According to the invention, the control method comprises also the step of dynamically estimating the grid's electrical model based on the electrical magnitudes measured at the power generation plant's point of connection (Vs, P, Q, I, cos fi).

In this way, changes in the power grid are detected (disconnection of loads or generation units, etc.) which affect the grid's equivalent impedance. Due to the fact that the grid model is used in the voltage control of this invention, the fact of detecting changes in impedance, allows the error made in calculating the reactive power commands to be minimised.

Said grid electrical model consists of a resistance (R) and a series reactance (X).

According to the invention, records of several consecutive values of grid impedance are saved, in such a way that in the face of sudden changes in the value of said impedance, voltage control parameters are modified, such as the response time or proportionality constant (K), in such a way that the stability of the control can continue to be guaranteed.

Another object of the invention is to provide a voltage control system for a power generation plant, said system comprising means for measuring electric variables at the connection point of the power generation plant and a control unit that calculates from the electric variables a reactive power command ($Q_{ref}$) wherein moreover, the reactive power command is calculated applying a control method according to what has been described above.

Another object of the invention consists of a wind farm characterised in that it comprises a control system as previously described.

In order to complement the description that we make next, and with the aim of aiding in a better understanding of the characteristics of the invention, this descriptive report is accompanied by a set of plans, whose figures by way of illustration but not limitation, represent the most characteristic details of the invention.

## BRIEF DESCRIPTION OF THE DESIGNS.

Figure 1. Shows the outline of a power generation plant distributed according to a preferred embodiment.

Figure 2. Shows the circuit diagram of a proportional voltage controller, according to the requirements of some grid operators.

Figure 3. Shows the circuit diagram of a proportional-integral voltage controller.

Figure 4. Shows the circuit diagram of a voltage controller according to a preferred embodiment.

Figure 5. Shows an equivalent circuit per phase of the power grid to which the power generation plant is connected.

Figure 6. Shows the control circuit diagram according to a preferred embodiment.

Figure 7. Shows an iterative solution method according to a preferred embodiment.

Figure 8. Shows an iterative solution method according to a preferred embodiment.

Figure 9. Shows the evolution of the grid voltage and the power of a wind farm.

Figure 10. Shows the evolution of the reference and measured substation voltage and the measured reactive power of a wind farm, according to a conventional voltage control.

Figure 11. Shows the evolution of the reference and measured substation voltage and the measured reactive power of a wind farm, according to the voltage control of a preferred embodiment.

Figure 12. Shows the evolution of the reference and measured substation voltage and the measured reactive power of a wind farm, according to the voltage control of a preferred embodiment.

## DESCRIPTION OF A PREFERRED EMBODIMENT

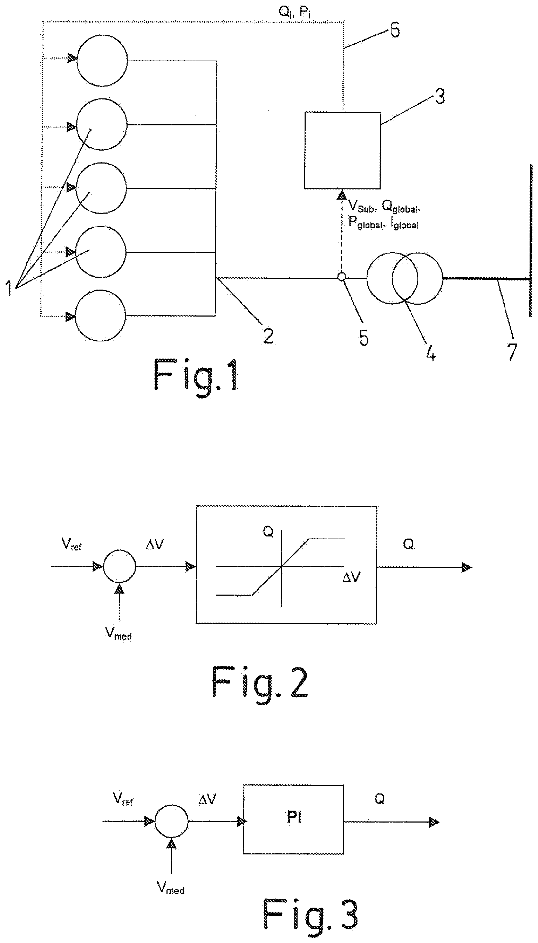

In the light of the abovementioned figures and following the adopted numbering, in figure 1 we can see the outline of a distributed generation plant (for example, a wind farm).

The distributed generation plant comprises, at least, two generation units (or wind turbines) 1, a park grid 2, a central control unit 3, a transformer 4, a measurement unit 5 and a communication network 6.

Said power generation plant is connected to the power grid 5 through a transformer 4 which adapts the park grid voltage 2, or generation voltage level, to the voltage of said power grid 7 or voltage level of the distribution or transport grid, as applicable.

The central control unit 3 receives information from the measurement unit 5 regarding the active and reactive power generated by the generation plant, the voltage level or current ($P_{global}$, $Q_{global}$, $V_{Sub}$), measured either on the side of the distributed generation plant 2, or on the side of the grid to which the generation plant is connected 7. Said information is used by the central control unit in order to calculate and send commands to the generator units regarding reactive and active power ($Q_i$, $P_i$) which respond to the voltage and frequency controls that may be required by the corresponding grid operator as applicable.

In figure 2 we can see the circuit diagram of a proportional voltage controller, according to what is required by certain grid operators as the level of penetration of renewable generation increases. Said controller establishes an amount of reactive power to be generated (Q) by the generation plant proportional to the voltage error ($\Delta V$) existing between the measured voltage ($V_{Med}$) and the reference voltage ($V_{ref}$) at the point at which the control voltage is to be carried out. As it is a proportional controller it does not eliminate the steady state voltage error.

An alternative to the above is the proportional-integral controller (PI) shown in figure 3. Said controller according to the voltage error ($\Delta V$) establishes an amount of reactive power to be generated by the power generation plant in such a way that the error is eliminated in the stationary state while the generation units are not saturated, in other words, have the capacity to generate all the reactive power that they are commanded to.

However, the integral controller is not required by grid operators, since it can cause fluctuations of reactive power generation and consumption by generators that do not have this type of control active and that are connected to a same point of the grid or are close to each other, due to a disparity in the time constants of the controllers that the different generation units have implemented or to errors in the voltage measurements.

It is for this reason that most grid operators demand a proportional voltage controller.

However, the proportional controller can cause fluctuations in voltage, depending on the constant of the required proportional controller and the short circuit power, as well as delays in communications and digital delays and delays associated to the response of reactive generation systems that the generation plant has available (generator units, condenser banks, FACTS-type devices, etc.).

This fact is caused due to the control being made based exclusively on the voltage measured at the connection point of the generation plant to the grid, which is much more likely to suffer variations with changes in the reactive and active power generated by the generation plant. Therefore, from the moment a change in voltage occurs until the central control detects it and generates the necessary reactive power commands, the generator units can be at a point of reactive power generation that may be opposite to that desired, increasing the voltage error.

Besides that, from the moment the voltage reaches the reference voltage, until it is communicated to the generator units, they continue to generate reactive power as if there were an error, thus making the control fluctuate.

The objective of this invention is to eliminate voltage fluctuations in the face of changes in functioning conditions, without having to resort to faster and therefore more expensive equipment and communication systems, so as to obtain a voltage control system of better characteristics than those in the state of the art.

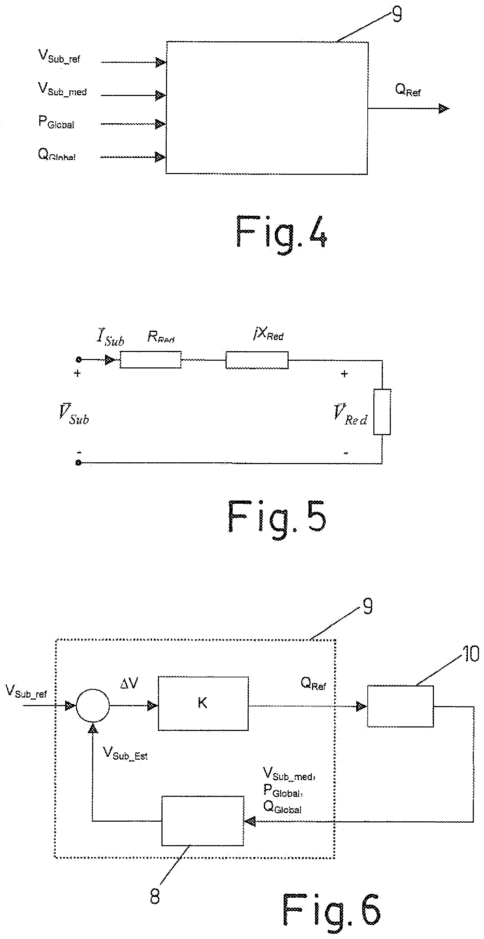

As can be seen from figure 4, in a preferred embodiment for the calculation of the reactive power command ($Q_{ref}$) block 9 uses measurements made in the connection point to the grid of generated active power ($P_{global}$), reactive power ($Q_{global}$) and voltage ($V_{Sub}$).

Likewise, the reference voltage is used ($V_{Sub\_ref}$) appropriate to the point where the voltage control is to be carried out.

In a preferred embodiment said point corresponds to a point of the grid to which the power generation plant is connected.

For the calculation of said reactive power reference ($Q_{ref}$) block 9 additionally uses an equivalent model of the power grid to which the power generation plant is connected.

In figure 5 it can be seen the equivalent circuit per phase used in a preferred embodiment corresponding to said grid model. The voltage ($V_{Sub}$) represents the voltage at the connection point to the grid of the power generation plant, while the voltage ($V_{Grid}$) represents the grid voltage and the impedance of the grid is given by a real part ($R_{Grid}$) and an imaginary part ($jX_{Grid}$). Using Park's transformation, the system of equations on axes ($dq$) that governs the behaviour of the represented circuit, for a three-phase voltage system is as follows:

$$V_{d\_Grid} = V_{d\_Sub} - R_{Grid} \cdot i_d + X_{Grid} \cdot i_q$$

$$V_{q\_Grid} = V_{q\_Sub} - R_{Grid} \cdot i_q - X_{Grid} \cdot i_d$$

The use of said grid equivalent model is based on the assumption that the most sudden changes in substation voltage ($V_{Sub}$) are directly related to changes in grid voltage ($V_{Grid}$).

The use of these expressions also requires knowledge of the grid impedance ($R_{Grid}$) and ($X_{Grid}$). This impedance depends on the consumption generation ratio, which translates into variations in the value of ($V_{Grid}$) and ($X_{Grid}$) at each moment and makes use of the above expressions difficult.

In a preferred embodiment constant grid impedance is assumed, leaving changes in the grid reflected only in the equivalent grid voltage. Said impedance may be evaluated from tests or be provided by the system operator.

Upon detecting a change in the substation voltage ($V_{Sub}$), the grid voltage ($V_{Grid}$) that has caused said change must be calculated. To do so, in a preferred embodiment, the currents ($i_d$) and ($iq$) are calculated of the equations system above based on the measurements of active power ($P_{global}$), reactive power ($Q_{global}$) and voltage ($V_{Sub}$) at the connection point to the grid (PCC), which, taking the substation voltage aligned to the axis (q), can be carried out according to the following expressions:

$$i_d = \frac{Q_{global}}{\sqrt{3} \cdot V_{Sub}} \qquad\qquad i_q = \frac{P_{global}}{\sqrt{3} \cdot V_{Sub}}$$

In a first preferred embodiment a proportional type control is posed of similar characteristics to that of figure 2. However, the proposed control does not directly use the voltage measured at the connection point ($V_{Sub\_med}$) for the calculation of the reactive power reference, but rather the voltage at that point corresponding to the stationary state, as shown in figure 6.

In said figure 6 one can see the control circuit according to said first preferred embodiment. In it, based on the measurements taken at the connection point to the grid ($P_{global}$, $Q_{global}$, $V_{Sub}$), block 8 calculates the voltage at the connection point corresponding to the stationary state ($V_{Sub\_Est}$) that will be reached in the new situation.

Based on the error ($\Delta V$) existing between said calculated voltage ($V_{Sub\_Est}$) and the reference voltage ($V_{Sub-Ref}$) a calculation is made based on the proportionality constant required by the system's operator of the command for reactive power to be generated by the power generation plant.

To this effect it is considered in a preferred embodiment that, since the transients in such an event are relatively fast, in the face of a change in voltage of the substation and until the new stationary situation is reached, the active power generated by the wind farm ($P_{Global}$) is not substantially modified. Therefore, the active power generated in the future stationary state will correspond to that measured at that instant. At the same time, it is also considered that the grid voltage ($V_{Grid}$) is not substantially modified as a consequence of the control of the substation voltage, instead, the variables that will have changed in the stationary state will be the generated reactive power ($Q_{Global}$) and as a result, the substation voltage ($V_{Sub}$).

In this way, the control system provides, upon a change in the system's variables, the reference value of the reactive power ($Q_{ref}$) related to the new value of stationary voltage ($V_{Sub\_Est}$). When this command value of reactive power is applied as reference ($Q_{ref}$) to the wind farm 10 any fluctuation will be avoided, since the control does not take into account what has happened with the variables during the transient. This is how the problems resulting from delays in communication and response times of the generator units are overcome.

In a preferred embodiment, the group of equations used in block 9 of figure 6 for the calculation of the substation voltage ($V_{Sub}$) in the future stationary state is as follows:

$$V_{d\_Sub} = V_{d\_Grid} + R_{Grid} \cdot i_{d\_Sub} - X_{Grid} \cdot i_{q\_Sub}$$

$$V_{q\_Sub} = V_{q\_Grid} + R_{Grid} \cdot i_{q\_Sub} + X_{Grid} \cdot i_{d\_Sub}$$

$$V_{Sub} = \sqrt{V_{d\_Sub}^2 + V_{q\_Sub}^2}$$

$$Q_{Calc} = 3 \cdot \left( V_{q\_Sub} \cdot i_{d\_Sub} - V_{d\_Sub} \cdot i_{q\_Sub} \right)$$

$$Q_{ref} = K \cdot \left( \Delta V \right)$$

$$Q_{Calc} = Q_{ref}$$

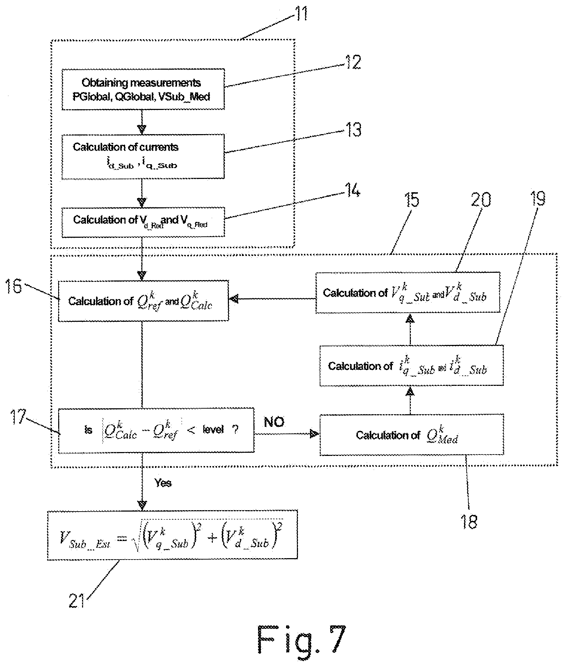

To resolve the above system of equations, in a preferred embodiment an iterative method is considered as can be seen in figure 7. In block 11 a series of prior steps to the iterative process is carried out, so as to obtain the variables necessary for said process. These are:

-   Obtaining measurements 12 of active power generated by the wind farm ($P_{Global}$), total generated reactive power ($Q_{Global}$) and voltage at the connection point to the power grid or at the point at which the voltage control is to be carried out ($V_{Sub}$).
-   Calculation of the current 13 at the point at which the voltage control on axes is to be carried out (*dq*), ($i_{d\_Sub}$) and ($i_{q\_Sub}$), based on the measurements of active power ($P_{global}$), reactive power ($Q_{global}$) and voltage ($V_{Sub}$) at the connection point to the grid (PCC), all of which, taking said voltage aligned with the axis (q), according to the following expressions:

$$i_{d\_Sub} = \frac{Q_{global}}{\sqrt{3} \cdot V_{Sub}} \qquad\qquad i_{q\_Sub} = \frac{P_{global}}{\sqrt{3} \cdot V_{Sub}}$$

-   Calculation of the grid voltage 14 on axes (dq), ($V_{d\_Grid}$) and ($V_{q\_Grid}$), according to the equations that govern the behaviour of the equivalent circuit per phase of the electrical grid to which the wind farm is connected shown in figure 4, in other words:

$$V_{d\_Grid} = V_{d\_Sub} - R_{Grid} \cdot i_{d\_Sub} + X_{Grid} \cdot i_{q\_Sub}$$

$$V_{q\_Grid} = V_{q\_Sub} - R_{Grid} \cdot i_{q\_Sub} - X_{Grid} \cdot i_{d\_Sub}$$

Of the variables measured, calculated or estimated in block 11, the following are presumed constant throughout the iterative process:

- Total generated power ($P_{global}$), which follows a slow dynamic. It is considered that in the face of a change in grid voltage and until the stationary subsequent to said change is reached, the variable that changes in consequence is the generated reactive power ($Q_{global}$).
- The grid voltage calculated on axes (*dq*), ($V_{d\_Grid}$) and ($V_{q\_Grid}$). It is presumed that the generation or consumption of reactive power corresponding to the voltage control does not have an influence on said grid voltage, instead exclusively on the substation voltage.

Once the calculations in block 11 have been made, the iterative process 15 begins. Said process comprises the following steps:

- Calculation in block 16 of the reactive powers ($Q_{ref}^{k}$) and ($Q_{Calc}^{k}$) based on the following expressions, where superscript K identifies the iteration number:

$$Q_{Calc}^{k} = 3 \cdot \left( V_{q\_Sub}^{k} \cdot i_{d\_Sub}^{k} - V_{d\_Sub}^{k} \cdot i_{q\_Sub}^{k} \right)$$

$$Q_{ref}^{k} = K \cdot \left( \Delta V^{k} \right)$$

- Checking in block 17 that the calculated reactive power corresponds effectively to the stationary state. To this effect, the calculation is made of the difference between the reactive power calculated on the basis of the system's currents and voltages ($Q_{Calc}^{K}$) and the reference reactive power corresponding to said voltages ($Q_{ref}^{K}$). Said difference is referred to as error:

$$Error = \left| Q_{Calc}^{k} - Q_{ref}^{k} \right|$$

In a preferred embodiment a boundary is established that cannot be exceeded by the error between the calculated reactive power and the reference reactive power, for the result to be considered as that corresponding to the stationary state:

$$\ \left| Q_{Calc}^{k} - Q_{ref}^{k} \right| < Boundary \ ?$$

If the error is greater than the established boundary, a new iteration is initiated.

- Calculation in block 18 of a new reactive power ($Q_{Med}^{K}$) which is calculated as a linear combination of ($Q_{Calc}^{k}$) and ($Q_{ref}^{k}$) with a view to the system converging, in the following manner:

$$Q_{Med}^{k} = K_{1} \cdot Q_{Calc}^{k} + K_{2} \cdot Q_{ref}^{k}$$

$K_{1}$ and $K_{2}$ can be adjusted previously in such a way that the number of iterations needed to reach the final result is minimised.

- Calculation in block 19 of the currents ($i_{q\_Sub}^{k}$) and ($i_{d\_Sub}^{k}$) which are established for the new situation of

reactive power ($Q_{Med}^{K}$), taking into account that the active power remains constant, on the basis of the following expressions:

$$i_{d\_Sub}^{k} = \frac{P_{Global} \cdot V_{d\_Sub}^{k} + Q_{Med}^{k} \cdot V_{q\_Sub}^{k}}{3 \cdot \left( \left( V_{d\_Sub}^{k} \right)^{2} + \left( V_{q\_Sub}^{k} \right)^{2} \right)}$$

$$i_{q\_Sub}^{k} = \frac{P_{Global} \cdot V_{q\_Sub}^{k} - Q_{Med}^{k} \cdot V_{d\_Sub}^{k}}{3 \cdot \left( \left( V_{d\_Sub}^{k} \right)^{2} + \left( V_{q\_Sub}^{k} \right)^{2} \right)}$$

- Calculation in block 20 of the voltages at the point at which the control is carried out, based on the equations that model the behaviour of the grid to which the wind farm is connected and the previously calculated currents, taking into account that ($V_{d\_Grid}$) and ($V_{q\_Grid}$) do not change in respect of the step prior to the iterative process:

$$V_{d\_Sub}^{k} = V_{d\_Grid} + R_{Grid} \cdot i_{d\_Sub}^{k} - X_{Grid} \cdot i_{q\_Sub}^{k}$$

$$V_{q\_Sub}^{k} = V_{q\_Grid} + R_{Grid} \cdot i_{q\_Sub}^{k} + X_{Grid} \cdot i_{d\_Sub}^{k}$$

- With the voltages and currents, within the iterative process 15, a calculation is made once more of the reference reactive power and the calculated reactive power, and the iterative process continues in a similar way. If indeed in block 17 it is verified that $\left| Q_{Calc}^{k} - Q_{ref}^{k} \right| < Boundary$ , the iterative process concludes and in block 21 the voltage is calculated corresponding to the stationary state that will be reached as a consequence of the change in grid voltage and on generating the reactive power required for that new situation. Said voltage on axes (dq) responds to the following expression:

$$V_{Sub\_Est} = \sqrt{\left( V_{q\_Sub}^{k} \right)^{2} + \left( V_{d\_Sub}^{k} \right)^{2}}$$

As can be seen in figure 6, in a preferred embodiment said stationary voltage ($V_{Sub\_Est}$) is used for the calculation of the error ($\Delta V$) to which a gain is applied (K) for the calculation of the reference reactive power.

In a second preferred embodiment, the system of equations resolved in block 9 of figure 4 is such that it includes an equation that equals the reference voltage to the effective value of the voltage measured at the point where the control is carried out, this way imposing a null error in the stationary state.

From the solving of the system of equations a production of reactive power is obtained ($Q_{Calc}$) that eliminates the error in the stationary state and that will be the one issued as the reactive power command (Qref) in order to carry out the voltage control.

$$V_{d\_Sub} = V_{d\_Grid} + R_{Grid} \cdot i_{d\_Sub} - X_{Grid} \cdot i_{q\_Sub}$$

$$V_{q\_Sub} = V_{q\_Grid} + R_{Grid} \cdot i_{q\_Sub} + X_{Grid} \cdot i_{d\_Sub}$$

$$V_{Sub} = \sqrt{V_{d\_Sub}^{2} + V_{q\_Sub}^{2}}$$

$$V_{Sub} = V_{ref}$$

$$Q_{Calc} = 3 \cdot \left( V_{q\_Sub} \cdot i_{d\_Sub} - V_{d\_Sub} \cdot i_{q\_Sub} \right)$$

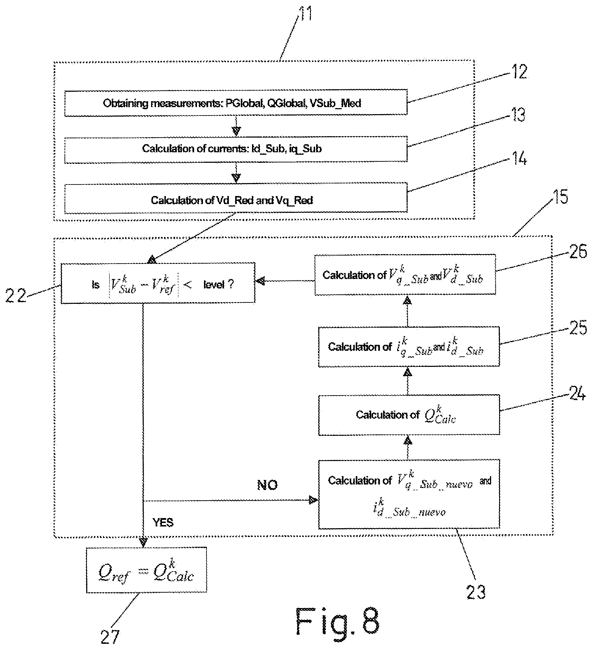

In order to solve the system of equations above, in a preferred embodiment an iterative method is considered as can be seen in figure 8.

In the previous step, related to block 11, at the beginning of the iterative process, the calculations coincide with those explained previously for figure 7, in the same way as the hypotheses of the iterative process coincide: the generated power ($P_{Global}$) and the grid voltage ($V_{d\_Grid}$) and ($V_{q\_Grid}$) remain constant from one step to another of the iterative process.

Once the prior calculations have been made in 11, the iterative process 15 begins. Said process comprises the following steps:

- Checking in block 22 that the calculated substation voltage (or measured in the case of the first iteration) and the reference substation voltage are approximately the same, in other words, that the error existing between them is less than a determined boundary level.

$$\left| V_{Sub}^k - V_{ref} \right| < Boundary$$

If the error is greater than the established boundary, a new iteration begins.

- Calculation in block 23 of the target substation voltage on the axis (q) ($V_{q\_Sub\_Target}^k$), based on the command voltage ($V_{ref}$). To this effect it is considered that the voltage on axis d does not change, rather it coincides with that of the previous iteration. In other words:

$$V_{q\_Sub\_Target}^k = \sqrt{V_{ref}^2 - \left( V_{d\_Sub}^k \right)^2}$$

Based on said voltage and the grid model to which the park is connected also calculated in block 23 is the target current on the axis (d) associated to the generation of reactive power, ($i_{d\_Sub\_Target}^k$), according to the following expression:

$$i_{d\_Sub\_Target}^k = \frac{\left( V_{q\_Sub\_Target}^k - V_{q\_Grid} - R_{Grid} \cdot i_{q\_Sub}^k \right)}{X_{Grid}}$$

To this effect it is considered that the current on the axis (q) remains constant.

- On the basis of said target current on the axis (d) and target voltage on the axis (q) in block 24 the target associated reactive power is calculated $Q_{Target}^K$.

$$Q_{Target}^K = 3 \cdot \left( V_{q\_Sub\_Target}^k \cdot i_{d\_Sub\_Target}^k - V_{d\_Sub}^k \cdot i_{q\_Sub}^k \right)$$

- Calculation in block 25 of the currents ($i_{q\_Sub}^k$) and ($i_{d\_Sub}^k$) that are established for the new situation of reactive power ($Q_{Target}^K$), bearing in mind that the active power remains constant, on the basis of the following expressions:

$$i^k_{d\_Sub} = \frac{P_{Global} \cdot V^k_{d\_Sub} + Q^k_{T\arg et} \cdot V^k_{q\_Sub}}{3 \cdot \left( \left(V^k_{d\_Sub}\right)^2 + \left(V^k_{q\_Sub}\right)^2 \right)}$$

$$i^k_{q\_Sub} = \frac{P_{Global} \cdot V^k_{q\_Sub} - Q^k_{T\arg et} \cdot V^k_{d\_Sub}}{3 \cdot \left( \left(V^k_{d\_Sub}\right)^2 + \left(V^k_{q\_Sub}\right)^2 \right)}$$

- Calculation in block 26 of the voltages at the point where the control is carried out, on the basis of the equations that model the behaviour of the grid to which the wind farm is connected and the previously calculated currents, bearing in mind that ($V_{d\_Grid}$) and ($V_{q\_Grid}$) do not change in respect of the prior step of the iterative process:

$$V^k_{d\_Sub} = V_{d\_Grid} + R_{Grid} \cdot i^k_{d\_Sub} - X_{Grid} \cdot i^k_{q\_Sub}$$

$$V^k_{q\_Sub} = V_{q\_Grid} + R_{Grid} \cdot i^k_{q\_Sub} + X_{Grid} \cdot i^k_{d\_Sub}$$

If effectively in block 22 it is verified that $\left| V^k_{Sub} - V_{ref} \right| < Boundary$, the iterative process 15 concludes and in block 27 the reactive power reference ($Q_{ref}$) is generated, equalling it to the target reactive power $\left( Q^K_{T\arg et} \right)$, thus achieving a reactive power reference that eliminates the voltage error in the future stationary state, in a much faster way than a conventional proportional-integral (PI) controller.

The blocks described above may correspond to different devices of which a control unit is made up, or alternatively a calculating unit may be adapted to carry out the calculations described above, with each described block being a stage of said calculation.

In a preferred embodiment a control unit of a wind farm is a programmable device set up to run the method described above. Both iterative methods are easy to implement in substation digital control systems, (PLC), and require reduced calculation times.

In a preferred embodiment a control system for a wind farm comprises means for measuring electrical variables at the connection point of the power generation plant with said control unit.

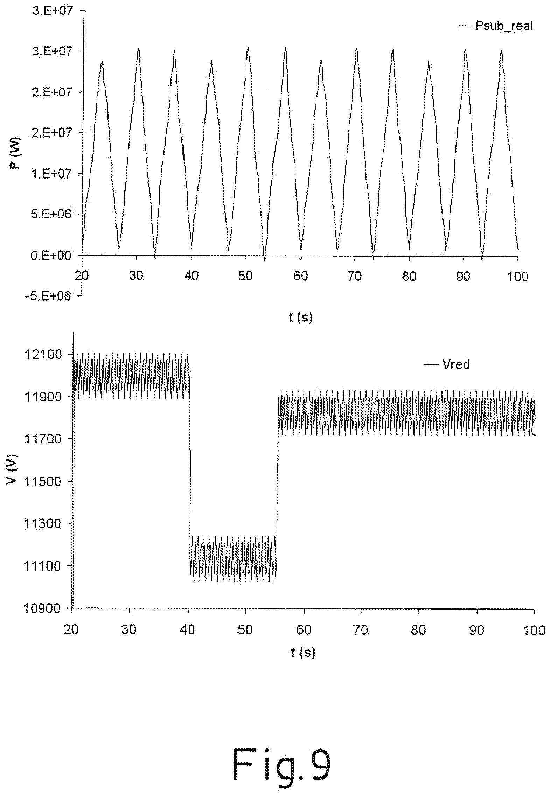

In figure 9 one can see the active power generated by a wind farm with an installed rating of 27 MW and the equivalent grid voltage of the system. A fast variation in active power is considered at the same time as a certain noise in grid voltage, to analyse the robustness of control systems. In this generation situation the response of different types of voltage controls are analysed.

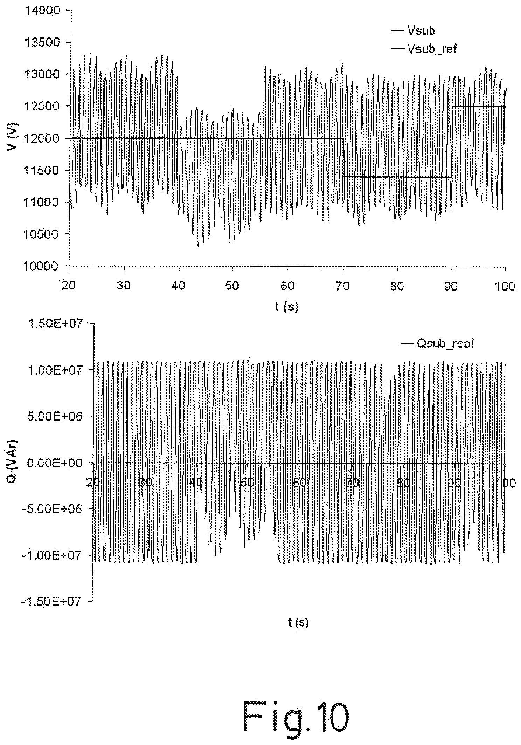

Figure 10 shows the evolution of the substation's voltage ($V_{sub}$) and the reactive power ($Q_{sub\_real}$) generated by the wind farm with a conventional voltage control. The response required by the system's operator is such that upon a deviation in voltage ($\Delta V$) of 4%, the wind turbines must generate all the reactive power that they are capable of, with the adequate sign, and with a speed of response of one second. It is verified that with this type of voltage control a good response is not achieved, since due to delays, characteristics of the grid, and the type of response required by the operator, the system becomes fluctuating.

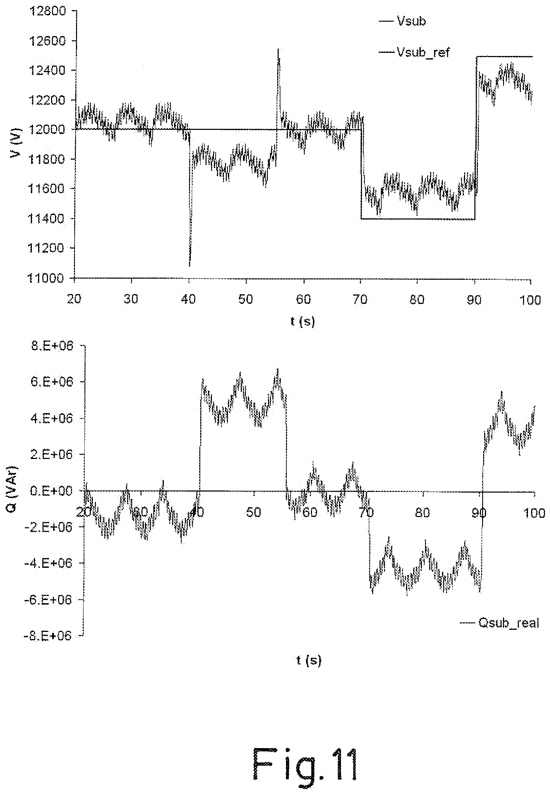

Figure 11 shows the evolution in the substation voltage ($V_{sub}$) and the reactive power generated by the wind farm ($Q_{sub\_real}$) with a voltage control according to the first embodiment of the invention. The response required by the system's operator is such that upon a deviation in voltage ($\Delta V$) of 4%, the wind turbines must generate all the reactive power that they are capable of, with the adequate sign, and with a speed of response of one second. It is verified that with this type of voltage control, a fast and stable response is achieved, since from the first instant the reactive power command is calculated and sent that is suitable for the stationary state of the voltage. The fluctuations that are observed are due to the weakness of the grid to which the wind farm is connected and to the fluctuations in generated active power and grid voltage. Moreover, due to the characteristics of the required response the error is not eliminated in the stationary state.

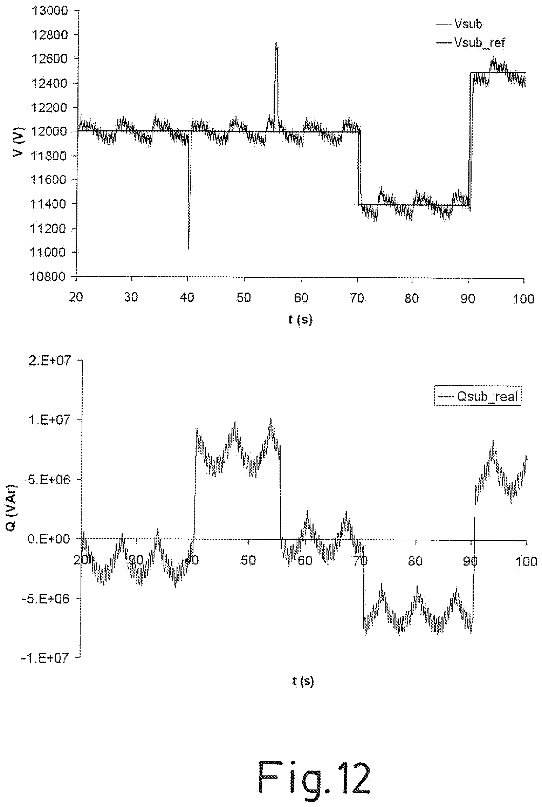

Figure 12 shows the evolution of the substation voltage ($V_{sub}$) and the reactive power generated by the wind farm ($Q_{sub\_real}$) with a voltage control according to a second embodiment of the invention. In this case, the requirement is to eliminate the voltage error in the stationary state. It is verified that with this type of voltage control, a fast and stable response is achieved that moreover, while the reactive capacity of the wind turbines allows it, eliminates the error in the stationary state. The fluctuations that can be observed are due to the reasons set out above.

In a preferred embodiment a dynamic estimate is made of the grid impedance value (Rgrid) and (Xgrid) based on the electric magnitudes measured at the connection point of the wind farm ($V_{sub}$, $P_{Global}$, $Q_{Global}$, I, cos fi).

The method of estimation is based on solving a system of equations in the stationary regime, which reflects the behaviour of the grid at three instants that are close in time (t1), (t2), (t3). For the execution of the grid estimate it is assumed that at said instants the grid voltage module ($V_{Grid}$), as well as the grid impedance remain constant.

Said system of equations, with the electric variables expressed on axes (dq) synchronised at the frequency of the grid and the q axis being aligned with the substation voltage (Vsub), remains as follows:

$$0 = V_{d\_Grid}^{t1} + R_{Grid} \cdot i_{d\_Sub}^{t1} - X_{Grid} \cdot i_{q\_Sub}^{t1}$$

$$V_{q\_Sub}^{t1} = V_{q\_Grid}^{t1} + R_{Grid} \cdot i_{q\_Sub}^{t1} + X_{Grid} \cdot i_{d\_Sub}^{t1}$$

$$0 = V_{d\_Grid}^{t2} + R_{Grid} \cdot i_{d\_Sub}^{t2} - X_{Grid} \cdot i_{q\_Sub}^{t2}$$

$$V_{q\_Sub}^{t2} = V_{q\_Grid}^{t2} + R_{Grid} \cdot i_{q\_Sub}^{t2} + X_{Grid} \cdot i_{d\_Sub}^{t2}$$

$$0 = V_{d\_Grid}^{t3} + R_{Grid} \cdot i_{d\_Sub}^{t3} - X_{Grid} \cdot i_{q\_Sub}^{t3}$$

$$V_{q\_Sub}^{t3} = V_{q\_Grid}^{t3} + R_{Grid} \cdot i_{q\_Sub}^{t3} + X_{Grid} \cdot i_{d\_Sub}^{t3}$$

where the superscripts (t1), (t2), (t3) identify the instants in time to which the equations correspond. The currents ($i_{d\_sub}$) and ($i_{q\_sub}$), as well as the voltages ($V_{q\_sub}$) at each instant are obtained on the basis of the measurements carried out at the connection point of the wind farm to the grid.

From the solution of the above system of equations the values of resistance ($R_{Grid}$) and inductance ($X_{Grid}$) of the equivalent grid model used for the voltage control that is the object of this invention.

In a preferred embodiment the time cycle for estimating the equivalent grid impedance is substantially greater than for the voltage control.

In a preferred embodiment records of several consecutive values of grid impedances are saved, in such a way that upon sudden changes in the value of said impedance, the parameters in the voltage control are modified so as to continue guaranteeing the stability of the control. In a preferred embodiment one of said parameters is the gain (K) of the control shown in figure 6.

In a preferred embodiment, upon sudden changes in the grid impedance value the control system signals this event by means of an alarm.

In an alternative embodiment various preset electric grid models may be available. Said electric grid models are characterised in a preferred embodiment by a grid impedance that can take on various preset values (provided for example by the operator of the grid to which the wind farm connects during the project definition stage). Said preset grid impedance values are the values that the operator has characterised as predominant at the connection point of the wind farm to the grid.

In this case the equations that govern the behaviour of the circuit represented in figure 5 are resolved at each instant for all the impedance values provided by the electrical operator, thus calculating the grid voltage for each impedance value and taking, for the wind farm's voltage control, the value of the grid voltage obtained at each instant that results in a more stable value. In a particular case of said alternative embodiment, the system operator provides two impedance values characterised by a resistance and a series impedance: $R_{Grid}^{1}$, $X_{Grid}^{1}$ in one case and $R_{Grid}^{2}$, $X_{Grid}^{2}$ in the other case. The solving of the equations on the dq axes (shown below) for the two impedance values, and based on the currents (id, iq) and voltages (Vd_sub, Vq_sub) measured at the connection point at each instant, provides two grid voltage values ($V_{d\_Grid}^{1}$, $V_{q\_Grid}^{1}$ and $V_{d\_Grid}^{2}$, $V_{q\_Grid}^{2}$) expressed on dq axes.

$$V^1_{d\_Grid} = V_{d\_Sub} - R^1_{Grid} \cdot i_d + X^1_{Grid} \cdot i_q$$

$$V^1_{q\_Grid} = V_{q\_Sub} - R^1_{Grid} \cdot i_q + X^1_{Grid} \cdot i_d$$

$$V^2_{d\_Grid} = V_{d\_Sub} - R^2_{Grid} \cdot i_d + X^2_{Grid} \cdot i_q$$

$$V^2_{q\_Grid} = V_{q\_Sub} - R^2_{Grid} \cdot i_q + X^2_{Grid} \cdot i_d$$

In order to determine which is the most stable value of grid voltage at each instant for use in the voltage control, in a preferred embodiment the variance is calculated for an established period of time of each one of the signals of grid voltages ($V_{d\_Grid}^1$, $V_{q\_Grid}^1$ and $V_{d\_Grid}^2$, $V_{q\_Grid}^2$) obtained with each one of the preset impedances, or any other known method for quantifying a signal's variability.

In an alternative embodiment, indexes that are indicative of a change in the grid are defined, that are calculated on the basis of the mobile integral of the absolute value of the derivative of the effective value of each one of the signals of grid voltage calculated with each one of the possible impedances $(\mathit{Int(\,Abs(\,Der(V^1_{Grid}\,)))}$, $(\mathit{Int(\,Abs(\,Der(V^2_{Grid}\,)))}$ as a signal indicative of a change in the grid to which the wind farm is connected. The calculation of the aforementioned indexes is done as follows:

$$( \mathit{Int(\,Abs(\,Der(V^1_{Grid}\,)))} = \int \left| \frac{dV^1_{Grid}}{dt} \right| dt$$

$$( \mathit{Int(\,Abs(\,Der(V^2_{Grid}\,)))} = \int \left| \frac{dV^2_{Grid}}{dt} \right| dt$$

When a change occurs in the grid, it affects either the voltage of the equivalent model or the impedance thereof and both changes are reflected in the indexes indicative of the change in the grid $(\mathit{Int(\,Abs(\,Der(V^1_{Grid}\,)))}$, $(\mathit{Int(\,Abs(\,Der(V^2_{Grid}\,)))}$.

However, when the change in the grid affects the voltage of the equivalent model, said indexes $(\mathit{Int(\,Abs(\,Der(V^1_{Grid}\,)))}$, $(\mathit{Int(\,Abs(\,Der(V^2_{Grid}\,)))}$ evolve in a similar manner, whereas if the change in the grid affects the impedance of the equivalent model, the index calculated $(\mathit{Int(\,Abs(\,Der(V^1_{Grid}\,)))}$, $(\mathit{Int(\,Abs(\,Der(V^2_{Grid}\,)))}$ with the inadequate impedance, will grow to a greater extent than the signal calculated with the correct impedance.

In order to distinguish between when the change occurs in the grid voltage and when it corresponds to a change in impedance, as a signal indicative of a change in impedance, the difference between the index indicative of the change in the grid calculated with the current impedance (that used for the estimation of the grid voltage ($V_{Grid}$) used in the voltage control according to this invention) and the index indicative of the change in the grid calculated with the rest of the possible impedances is used. When said difference exceeds a certain threshold, that impedance which gives rise to a greater difference between indexes is selected for the estimation of the grid voltage used in the voltage control.

**Claims**

1. VOLTAGE CONTROL METHOD OF A POWER GENERATION PLANT connected to a power grid, that comprises the following steps:

- estimating an equivalent grid voltage ($V_{Grid}$) based on electric magnitudes measured at the connection point of the power generation plant ($V_{Sub}$, $P_{global}$, $Q_{global}$, $I_{global}$, cos fi), and based on an equivalent model of the power grid to which the power generation plant is connected;

- generating on the basis of said estimated equivalent voltage ($V_{Grid}$) a command ($Q_{ref}$) indicative of reactive power to be produced by the power generation plant;

- dynamically estimating the grid model on the basis of the electric magnitudes measured at the connection point of the power generation plant ($V_{Sub}$, $P_{global}$, $Q_{global}$, $I_{global}$, COS fi); **characterised in that** the equivalent model of the power grid on which the step of estimating an equivalent grid voltage ($V_{Grid}$) is based comprises an impedance of the power grid to which the power generation plant is connected and the method further comprises a step of:

- employing several consecutive values of the grid impedance, in such a way that upon sudden changes in the value of said grid impedance, parameters are modified in the voltage control so as to continue to guarantee the stability of the voltage control.

2. VOLTAGE CONTROL METHOD OF A POWER GENERATION PLANT, according to claim 1, **characterised in that** the reactive power command ($Q_{ref}$) is calculated on the basis of the equivalent grid voltage ($V_{Grid}$) and has a value that corresponds to the reactive power that the power generation plant must generate in a stationary manner in order to fulfil a preset law of control.

3. VOLTAGE CONTROL METHOD OF A POWER GENERATION PLANT, according to claim 2, **characterised in that** the preset law of control defines the reactive power to be generated ($Q_{ref}$) according to a voltage at the connection point of the power generation plant ($V_{Sub}$) and a reference voltage ($V_{ref}$).

4. VOLTAGE CONTROL METHOD OF A POWER GENERATION PLANT, according to claim 3, **characterised in that** it is calculated the voltage at the connection point ($V_{Sub\_Est}$) that will be reached in a stationary manner, on the basis of the equivalent grid voltage ($V_{Grid}$) and assuming a generated reactive power equal to the command ($Q_{ref}$).

5. VOLTAGE CONTROL METHOD OF A POWER GENERATION PLANT, according to claim 3, **characterised in that** the preset law of control is defined by means of a reference voltage for the voltage at the connection point ($V_{ref}$) and a constant (K) that relates the voltage at the connection point ($V_{Sub}$) and the reactive power to be generated ($Q_{ref}$).

6. VOLTAGE CONTROL METHOD OF A POWER GENERATION PLANT, according to claim 2, **characterised in that** the law of control defines the voltage that must be reached in a stationary manner at the connection point of the park ($V_{ref}$).

7. VOLTAGE CONTROL METHOD OF A POWER GENERATION PLANT, according to claim 1, **characterised in that** said electric grid model consists of a resistance (R) and a series reactance (X).

8. VOLTAGE CONTROL METHOD OF A POWER GENERATION PLANT, according to any of claims 1 to 6, **characterised in that** said method comprises also the step of calculating the equivalent grid voltage ($V_{Grid}$) for various preset electric grid models and the step of selecting at each moment a most stable equivalent grid voltage ($V_{Grid}$).

9. VOLTAGE CONTROL SYSTEM OF A POWER GENERATION PLANT, which comprises means for measuring electric variables at the connection point of the power generation plant and a control unit that calculates on the basis of the electric variables a command for reactive power (Qref), wherein the control unit is configured to:

- estimate an equivalent grid voltage ($V_{Grid}$) based on electric magnitudes measured at the connection point of the power generation plant ($V_{Sub}$, $P_{global}$, $Q_{global}$, $I_{global}$, cos fi), and based on an equivalent model of the power grid to which the power generation plant is connected;

- generate on the basis of said estimated equivalent voltage ($V_{Grid}$) a command ($Q_{ref}$) indicative of reactive power to be produced by the power generation plant;

- dynamically estimate the grid model on the basis of the electric magnitudes measured at the connection point of the power generation plant ($V_{Sub}$, $P_{global}$, $Q_{global}$, $I_{global}$, COS fi); **characterised in that** the equivalent model of the power grid comprises an impedance of the power grid to which the power generation plant is connected and the control unit is also configured to:

- employ several consecutive values of the grid impedance, in such a way that upon sudden changes in the value of said grid impedance, parameters are modified in the voltage control so as to continue to guarantee the stability of the voltage control.

**10.** WIND FARM, **characterised in that** it comprises the control system described in claim 9.

**Patentansprüche**

**1.** Spannungssteuerverfahren für ein an ein Stromversorgungsnetz angeschlossenes Stromkraftwerk, das die folgenden Schritte umfasst:

- Schätzung einer äquivalenten Netzspannung ($V_{Grid}$) beruhend auf elektrischen Größen, die an der Anschlussstelle des Stromkraftwerks ($V_{Sub}$, $P_{global}$, $Q_{global}$, $I_{global}$, cos fi) gemessen werden, und beruhend auf einem äquivalenten Modell des Stromnetzes, an welches das Stromkraftwerk angeschlossen ist;
- Erzeugung eines Befehls ($Q_{ref}$) auf Grundlage dieser geschätzten äquivalenten Spannung ($V_{Grid}$), der die vom Stromkraftwerk zu erzeugende Blindleistung anzeigt;
- dynamische Schätzung des Netzmodells beruhend auf den an der Anschlussstelle des Stromkraftwerks ($V_{Sub}$, $P_{global}$, $Q_{global}$, $I_{global}$, cos fi) gemessenen elektrischen Größen;
**dadurch gekennzeichnet, dass** das äquivalente Modell des Stromnetzes, auf dem der Schritt der Schätzung einer äquivalenten Netzspannung (VGrid) beruht, eine Impedanz des Stromnetzes umfasst, an welches das Stromkraftwerk angeschlossen ist, und dass das Verfahren weiterhin den folgenden Schritt umfasst:

- Verwendung mehrerer aufeinander folgender Werte der Netzimpedanz, sodass bei plötzlichen Änderungen des Werts dieser Netzimpedanz Parameter in der Spannungssteuerung geändert werden, um die Stabilität der Spannungssteuerung weiterhin zu gewährleisten.

**2.** Spannungssteuerverfahren für ein Stromkraftwerk nach Anspruch 1, **dadurch gekennzeichnet, dass** der Blindleistungsbefehl ($Q_{ref}$) auf Grundlage der äquivalenten Netzspannung ($V_{Grid}$) berechnet wird und einen Wert besitzt, welcher der Blindleistung entspricht, die das Stromkraftwerk stationär erzeugen muss, um eine voreingestellte Steuerregel zu erfüllen.

**3.** Spannungssteuerverfahren für ein Stromkraftwerk nach Anspruch 2, **dadurch gekennzeichnet, dass** die voreingestellte Steuerregel die zu erzeugende Blindleistung ($Q_{ref}$) gemäß einer Spannung an der Anschlussstelle des Stromkraftwerks ($V_{Sub}$) und einer Referenzspannung ($V_{ref}$) definiert.

**4.** Spannungssteuerverfahren für ein Stromkraftwerk nach Anspruch 3, **dadurch gekennzeichnet, dass** die stationär erreichte Spannung an der Anschlussstelle ($V_{Sub\_Est}$) auf Grundlage der äquivalenten Netzspannung ($V_{Grid}$) berechnet wird, wobei eine erzeugte Blindleistung gleich dem Befehl ($Q_{ref}$) angenommen wird.

**5.** Spannungssteuerverfahren für ein Stromkraftwerk nach Anspruch 3, **dadurch gekennzeichnet, dass** die voreingestellte Steuerregel mittels einer Referenzspannung für die Spannung an der Anschlussstelle ($V_{ref}$) und einer Konstanten (K) definiert ist, welche die Spannung an der Anschlussstelle ($V_{Sub}$) und die zu erzeugende Blindleistung ($Q_{ref}$) miteinander in Beziehung setzt.

**6.** Spannungssteuerverfahren für ein Stromkraftwerk nach Anspruch 2, **dadurch gekennzeichnet, dass** die Steuerregel die Spannung definiert, die stationär an der Anschlussstelle des Parks ($V_{ref}$) erreicht werden muss.

**7.** Spannungssteuerverfahren für ein Stromkraftwerk nach Anspruch 1, **dadurch gekennzeichnet, dass** dieses elektrische Netzmodell aus einem Widerstand (R) und einem Blindwiderstand in Serie (X) besteht.

**8.** Spannungssteuerverfahren für ein Stromkraftwerk nach einem der Ansprüche 1 bis 6, **dadurch gekennzeichnet, dass** dieses Verfahren außerdem den Schritt der Berechnung der äquivalenten Netzspannung ($V_{Grid}$) für verschiedene voreingestellte elektrische Netzmodelle sowie den Schritt umfasst, zu jedem Zeitpunkt die stabilste äquivalente Netzspannung ($V_{Grid}$) auszuwählen.

**9.** Spannungssteuersystem eines Stromkraftwerks, das Mittel zur Messung der elektrischen Variablen an der Anschlussstelle des Stromkraftwerks und eine Steuereinheit umfasst, die beruhend auf den elektrischen Variablen einen Befehl für die Blindleistung ($Q_{ref}$) berechnet, wobei die Steuereinheit dazu ausgelegt ist:

- eine äquivalente Netzspannung ($V_{Grid}$) beruhend auf elektrischen Größen zu schätzen, die an der Anschlussstelle des Stromkraftwerks ($V_{Sub}$, $P_{global}$, $Q_{global}$, $I_{global}$, cos fi) gemessen werden, und beruhend auf einem äquivalenten Modell des Stromnetzes, an welches das Stromkraftwerk angeschlossen ist;
- beruhend auf dieser geschätzten äquivalenten Spannung ($V_{Grid}$) einen Befehl ($Q_{ref}$) zu erzeugen, der die vom Stromkraftwerk zu erzeugende Blindleistung anzeigt;
- das Netzmodell beruhend auf den an der Anschlussstelle des Stromkraftwerks ($V_{Sub}$, $P_{global}$, $Q_{global}$, $I_{global}$, cos fi) gemessenen elektrischen Größen dynamisch zu schätzen;
**dadurch gekennzeichnet, dass** das äquivalente Modell des Stromnetzes eine Impedanz des Stromnetzes umfasst, an welches das Stromkraftwerk angeschlossen ist, und dass die Steuereinheit ebenfalls dazu ausgelegt ist:

- mehrere aufeinander folgende Werte der Netzimpedanz zu verwenden, sodass bei plötzlichen Änderungen des Werts dieser Netzimpedanz Parameter in der Spannungssteuerung geändert werden, um die Stabilität der Spannungssteuerung weiterhin zu gewährleisten.

**10.** Windpark, **dadurch gekennzeichnet, dass** dieser das in Anspruch 9 beschriebene Steuersystem umfasst.

## Revendications

**1.** Procédé de contrôle de la tension d'une centrale électrique raccordée à un réseau électrique, qui comprend les étapes suivantes :

- estimer une tension de réseau équivalente ($V_{Grid}$) basée sur des magnitudes électriques mesurées au point de raccordement de la centrale électrique ($V_{sub}$, $P_{global}$, $Q_{global}$, $I_{global}$, cos fi), et basée sur un modèle équivalent du réseau électrique auquel la centrale électrique est raccordée ;
- générer sur la base de ladite tension équivalente estimée ($V_{Grid}$) une commande ($Q_{ref}$) qui indique la puissance réactive devant être produite par la centrale électrique ;
- estimer dynamiquement le modèle de réseau sur la base des magnitudes électriques mesurées au point de raccordement de la centrale électrique ($V_{sub}$, $P_{global}$, $Q_{global}$, $I_{global}$, COS fi) ;
**caractérisé en ce que** le modèle équivalent du réseau électrique sur lequel l'étape d'estimation d'une tension de réseau équivalente ($V_{Grid}$) est basée comprend une impédance du réseau électrique auquel la centrale électrique est raccordée et le procédé comprend en outre une étape consistant à :

- utiliser plusieurs valeurs consécutives de l'impédance de réseau, de façon que lors de soudains changements de valeur de ladite impédance de réseau, des paramètres soient modifiés dans le contrôle de la tension pour continuer à garantir la stabilité du contrôle de la tension.

**2.** Procédé de contrôle de la tension d'une centrale électrique, selon la revendication 1, **caractérisé en ce que** la commande de puissance réactive ($Q_{ref}$) est calculée sur la base de la tension de réseau équivalente ($V_{Grid}$) et a une valeur qui correspond à la puissance réactive que la centrale électrique doit générer de façon stationnaire afin de satisfaire à une loi de contrôle prédéfinie.

**3.** Procédé de contrôle de la tension d'une centrale électrique, selon la revendication 2, **caractérisé en ce que** la loi de contrôle prédéfinie détermine la puissance réactive devant être générée ($Q_{ref}$) en fonction d'une tension au point de raccordement de la centrale électrique ($V_{sub}$) et d'une tension de référence ($V_{ref}$).

**4.** Procédé de contrôle de la tension d'une centrale électrique, selon la revendication 3, **caractérisé en ce qu'**on calcule la tension au point de raccordement ($V_{Sub\_Est}$) qui sera atteinte de façon stationnaire, sur la base de la tension de réseau équivalente ($V_{Grid}$) et en présupposant une puissance réactive générée égale à la commande ($Q_{ref}$).

**5.** Procédé de contrôle de la tension d'une centrale électrique, selon la revendication 3, **caractérisé en ce que** la loi de contrôle prédéfinie est déterminée au moyen d'une tension de référence pour la tension au point de raccordement ($V_{ref}$) et d'une constante (K) qui relie la tension au point de raccordement ($V_{sub}$) et la puissance réactive devant être générée ($Q_{ref}$).

**6.** Procédé de contrôle de la tension d'une centrale électrique, selon la revendication 2, **caractérisé en ce que** la loi de contrôle détermine la tension qui doit être atteinte de façon stationnaire au point de raccordement du parc ($V_{ref}$).

**7.** Procédé de contrôle de la tension d'une centrale électrique, selon la revendication 1, **caractérisé en ce que** ledit modèle de réseau électrique consiste en une résistance (R) et une réactance série (X).

**8.** Procédé de contrôle de la tension d'une centrale électrique, selon l'une des revendications 1 à 6, **caractérisé en ce que** ledit procédé comprend également l'étape consistant à calculer la tension de réseau équivalente ($V_{Grid}$) pour plusieurs modèles de réseaux électriques prédéfinis et l'étape consistant à sélectionner à chaque instant une tension de réseau équivalente ($V_{Grid}$) la plus stable.

**9.** Système de contrôle de la tension d'une centrale électrique, qui comprend des moyens de mesure de variables électriques au point de raccordement de la centrale électrique et une unité de contrôle qui calcule sur la base des variables électriques une commande pour puissance réactive ($Q_{ref}$), où l'unité de contrôle est configurée pour :

- estimer une tension de réseau équivalente ($V_{Grid}$) basée sur des magnitudes électriques mesurées au point de raccordement de la centrale électrique ($V_{sub}$, $P_{global}$, $Q_{global}$, $I_{global}$, cos fi), et basée sur un modèle équivalent du réseau électrique auquel la centrale électrique est raccordée ;
- générer sur la base de ladite tension équivalente estimée ($V_{Grid}$) une commande ($Q_{ref}$) qui indique la puissance réactive devant être produite par la centrale électrique ;
- estimer dynamiquement le modèle de réseau sur la base des magnitudes électriques mesurées au point de raccordement de la centrale électrique ($V_{sub'}$, $P_{global'}$, $Q_{global'}$, $I_{global'}$, COS fi) ;
**caractérisé en ce que** le modèle équivalent du réseau électrique comprend une impédance du réseau électrique auquel la centrale électrique est raccordée et l'unité de contrôle est également configurée pour :

- utiliser plusieurs valeurs consécutives de l'impédance de réseau, de façon que lors de soudains changements de valeur de ladite impédance de réseau, des paramètres soient modifiés dans le contrôle de la tension pour continuer à garantir la stabilité du contrôle de la tension.

**10.** Parc éolien, **caractérisé en ce qu'**il comprend le système de contrôle décrit dans la revendication 9.

Fig.1

Fig.2

Fig.3

Fig.4

Fig.5

Fig.6

Fig. 7

Fig.8

Fig.9

Fig.10

Fig.11

Fig.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6965174 B2
- EP 1433238 A

- US 7166928 B2
- EP 1508951 A1